# EUROPEAN PATENT SPECIFICATION

(11) **EP 2 877 003 B1**
(45) Date of publication and mention of the grant of the patent: **29.06.2016**
(21) Application number: 13742602.9
(22) Date of filing: 22.07.2013
(51) Int. Cl.: A01N 37/02, A01N 25/02, A01P 13/00

(54) **EMULSIFIABLE CONCENTRATE (EC) FORMULATION WITH HERBICIDAL ACTIVE FATTY ACIDS**
AUF FETTSÄUREN BASIERENDE EMULGIERBARE KONZENTRATE MIT VERBESSERTER HERBIZIDER WIRKUNG
CONCENTRÉ ÉMUSIONABLE A BASE D'ACIDE GRAS AVEC UNE ACTIVITÉ HERBICIDE AMELIORÉ

(30) Priority: 25.07.2012 EP 12177824
(43) Date of publication of application: 03.06.2015
(73) Proprietor: Bayer CropScience AG, 40789 Monheim am Rhein (DE)
(72) Inventor: KIJLSTRA, Johan, 51519 Odenthal (DE); BAUR, Peter, 86938 Schondorf (DE); MORAN PUENTE, Diana Westfalia, 69226 Nussloch (DE); LENTHE, Jan-Henrik, 40822 Mettmann (DE)
(74) Representative: BIP Patents
(86) International application number: PCT/EP2013/065370
(87) International publication number: WO 2014/016229

(56) References cited:
- US-A- 5 021 459
- US-A- 5 035 741
- US-A- 5 489 569
- US-A- 5 610 194
- US-A1- 2007 293 550

## Description

The present invention relates to emulsifiable concentrate (EC) formulations comprising at least one fatty acid wherein the at least one fatty acid is in its free fatty acid form and has herbicidal activity, one or more N-monoalkyl- and N,N-dialkyl-alkylcarboxamide of formula (I) and at least one emulsifier component as well as diluted aqueous compositions of such EC formulations and their use as herbicides and/or dessicants.

It is known that fatty acids and the salts thereof can been used for the preparation of herbicidal compositions.

US 6,503,869 B1 describes the addition of ammonium salts of fatty acids to post-emergent herbicidal compositions for the prevention or elimination of undesired vegetation.

US 6,323,156 B1 describes an aqueous herbicidal compositions which contains, as the active ingredient, an ammonium salt of a fatty acid wherein no more than 0,5 wt.% of the active ingredient is a free fatty acid.

US 6,608,003 B2 describes aqueous herbicidal compositions based on ammonium salts of fatty acids enhanced by the addition of carboxylic diesters. In a most preferred embodiment, the herbicidal composition of this invention contains essentially no free fatty acid.

GB 2247621 A describes a aqueous herbicidal compositions based on partially saponified fatty acids and a monohydric alcohol, having a synergistic effect on enhancing the rate and efficiency of mortality of herbage and/or undesirable flora.

WO 01/50862 A1 discloses a herbicidal composition containing a derivative of maleic hydrazide and a carboxylic acid component. The preferred composition describes an aqueous carboxylic ammonium salt compositions with saponification of the carboxylic acid as low as 25% and larger and a pH greater or equal to 6.

These aqueous saponified fatty acids formulations of the above described prior art have several disadvantages. During the production, they require the handling of concentrated and corrosive ammonium hydroxide solutions to neutralize the fatty acid. Aqueous solutions of fatty acid ammonium salts are limited in their maximum fatty acid content and generally corrosive. Moreover, in open environment the evaporation and release of ammonia will generate not only an unpleasant offensive smell but also release free fatty acid from its ammonium salt. Moreover, due the low water-solubility of the free fatty acid, this may negatively affect the biological performance of the product.

US 5,106,410 includes a ready-to-use herbicidal emulsion including fatty acid, a surfactant component, preferably comprising at least one quaternary ammonium salt and a balance of water. It also features a concentrate composition having a fatty acid and one or more hydrophobic surfactants. The most preferred surfactants for use with this concentrate composition are those which lack a terminal group, such as a hydroxyl group, which are reactive with the fatty acid component.

US 5,035,741 describes a herbicidal composition, suitable for emulsification in water, containing a monocarboxylic acid component, an emulsifier component and an oil component selected from the group consisting of triglycerides, terpenoids and paraffinic mineral oils. These compositions aim at providing an environmentally compatible herbicide with reduced eye and skin corrosivity.

All these formulations of the prior art show on or more of the following disadvantages: 1) handling of concentrated ammonia, 2) unpleasant odor, 3) limited active ingredient content (giving high product volumes), 4) limited biological efficacy, a.o. due lack of suitable adjuvants which boost the biological performance, 5) eye and skin irritation properties and/or 6) selected choice of surfactant and emulsifier eg. due incompatibility to the fatty acid component.

An object of the present invention is therefore to provide improved fatty acid based formulations and their methods of use which exhibit excellent herbicidal and/or dessicant efficacy and address the disadvantages of the formulations of the prior art and in particular reduce skin and eye irritation properties.

These and other objects of the present invention have been achieved by providing an emulsifiable concentrate (EC) formulation comprising (a) at least one fatty acid wherein the at least one fatty acid is in its free fatty acid form and has herbicidal activity, (b) one or more N-monoalkyl- and N,N-dialkyl-alkylcarboxamide(s) of formula (I) and (c) at least one emulsifier component. Emulsifiable concentrate (EC) formulations conventionally contain an active ingredient, one or more surfactants which act as emulsifiers upon dilution of the EC with water, and a water immiscible solvent. Typical solvents for conventional EC formulations are aromatic hydrocarbons such as xylene, Shellsol A or Solvesso 200. These solvents have very low solubilities in water and are capable of dissolving a wide range of active ingredients.

The use of carboxamides for promoting the penetration of active substance into plants has been described by US 2007/0293550 A1. Preferred is the use of carboxamides as adjuvant for systemic active substances, i.e. those which are taken up by the plant via the leaves or the roots and which are translocated in the plant sap, the plant's transport system. Herbicidal active fatty acids, which may also act as dessicant, do not translocate in the plant. They are known to be contact herbicides which do not show any systemic activity.

Surprisingly, it has now been found that certain carboxamides also boost the efficacy of non-systemic fatty acids components as contact herbicides and make such fatty acid based emulsifiable concentrates more rainfast.

Moreover, it has also been surprisingly found that fatty acid based emulsifiable concentrates containing at least one certain carboxamide component show reduced skin and eye irritation properties.

These new EC formulations of the invention are concentrated foliar applied non-selective herbicides, to be diluted with water prior to use and sprayed upon unwanted weeds and grasses.

Diluted aqueous composition of these new EC formulations can also be used as dessicants to facilitate and/or improve harvest and limit the spread of (late) diseases by removing the green plant parts before harvest in crops such as rape, cotton, potatoes, dry common beans and peas.

In summary, with this invention it has surprisingly been found that an EC formulations containing (a) at least one fatty acid wherein the at least one fatty acid is in its free fatty acid form and has herbicidal activity, and (b) one or more N-monoalkyl- and N,N-dialkyl-alkylcarboxamide(s) of formula (I) and (c) at least one emulsifier component are stable and have a lower skin and eye irritation potential and that diluted aqueous composition of these EC formulations exhibit superior contact herbicide- and/or dessicant activity and improved rainfastness. As a further advantage it has been found that the EC formulations of the invention (and diluted aqueous composition thereof) do not unpleasantly smell in comparison to ammonia neutralized herbicidal fatty acid formulations after application.

The desiccant effect of the diluted aqueous composition of the EC formulation according to the present invention is caused by dehydration of the contacted plant cells due to the fatty acids of the formulation. By this mode of action weed/ pest plants can be controlled and effectively eliminated. As described above this desiccant effect can also be used to protect crop plants e.g. against infestation/spreading of (late) diseases by applying diluted aqueous composition of the EC formulation according to the invention shortly before the harvest of such crop plants.

The fatty acid component (a) of the EC formulations according to the present invention is a herbicidal fatty acid which can be one herbicidal active fatty acid and/or a mixture of herbicidal active fatty acids. Fatty acids which may preferably be used include caprylic acid, pelargonic acid, capric acid, undecanoic acid, 10-undecanoic acid, lauric acid, myristic acid, palmitic acid, oleic acid and mixtures thereof. Other fatty acid mixtures such as soybean fatty acids and coconut fatty acids and other naturally occurring fatty acid mixtures may also form the fatty acid component of the EC formulation of the invention. An exemplary non-saponified fatty acid active ingredient is pelargonic acid. Also, a mixture of caprylic acid and capric acid, eg. at a 1.5 : 1 ratio, serves as an effective non-saponified active ingredient.

In a preferred embodiment caprylic, pelargonic and capric acids or mixtures of caprylic, pelargonic, capric and lauric acids are used as fatty acid-based active ingredients for the EC formulation of the invention. Caprylic, pelargonic and capric acids are even more preferred herbicidal active ingredient components of the EC formulation of the invention. In an even more preferred embodiment a mixture of caprylic and capric acid is used.

The fatty acid component (a) of the EC formulation is in its free fatty acid form (i.e. non-saponified fatty acids and not fatty acid salts).

The component (b) of the EC formulation of the present invention is one or more N-monoalkyl- and N,N-dialkyl-alkylcarboxamides (b) are of the formula (I):

R¹--CO--NR²R³ (I)

in which
R¹ represents unbranched, saturated alkyl group having 5 to 11 carbon atoms,
R² represents C₁-C₆-alkyl and
R³ represents H or C₁-C₆-alkyl.

R¹ is preferably n-heptyl, n-octyl, n-nonyl, n-decyl or n-dodecyl.

R² and R³ are preferably identical or different, especially preferably identical, and an unbranched or branched; more preferably unbranched alkyl group having 1 to 4 carbon atoms; and even more preferably methyl.

Especially preferred compounds of the formula (I) are therefore those of the formula (Ia)

R¹--CO--N(CH₃)₂ (Ia)

in which R¹ has the abovementioned meanings.

The following carboxamides compounds as component (b) of the EC formulation according to the invention are the most preferred carboxamides: N,N-dimethyl-n-hexanamide, N,N-dimethyl-n-octanamide, N,N-dimethyl-n-nonanamide, N,N-dimethyl-n-decanamide, N,N-dimethyl-n-dodecanamide or mixtures thereof.

The carboxamide compounds of the formula (I) are employed individually or in the form of mixtures. Preferred is not only the use of individual carboxamide compounds but also the use of commercially available carboxamide mixtures which are known under the trade names Hallcomid®, Genagen® or Agnique®.

The carboxamide compounds of the formula (I) as well as mixtures thereof including those known under the trade names Hallcomid®, Genagen® or Agnique® are generally considered as skin and eye irritants. For example, commercially available mixtures of N,N-dimethyl-n-octanamide and/or N,N-dimethyl-n-decanamide are known to cause skin and serious eye irritation. The most preferred carboxamide compounds for the EC formulation of this invention are N,N-dimethyl-n-octanamide and/or N,N-dimethyl-n-decanamide and preferably N,N-dimethyl-n-decanamide or a mixture of N,N-dimethyl-n-octanamide and N,N-dimethyl-n-decanamide. Such carboxamide compounds are known under the trade names Hallcomid M 10R®, Genagen 4296® or Agnique KE 3308®.

It has surprisingly been found that the irritation potential of fatty acid EC formulations (and diluted aqueous composition thereof) can be lowered by incorporating a carboxamide compound, which itself is known to be irritating.

The EC-formulation according to the invention comprises as an additional third essential component (c) also at least one suitable emulsifier component enabling an oil-in-water emulsion to be formed when the EC formulation of the invention is added to water.

Preferably, the emulsifier component is at least one non-ionic surfactant selected from the group of alkoxylated alcohols, ethoxylated alcohols, ethopropoxylated alcohols, alkylphenolethoxylates, alkoxylated tristyrylphenols, alkoxylated tributylphenols, alkylaminethoxylates, ethoxylated vegetable oils including their hydrogenates, polyadducts of ethylene oxide and propylene oxide (e.g. polyoxyethylene-polyoxypropylene block copolymers and their derivatives), ethoxylated fatty acids, nonionic polymeric surfactants (e.g. polyvinylalcohol, polyvinylpyrrolidone, polymethacrylates and their derivatives), sorbitan esters and their ethoxylates, sorbitolesters, propylene glycol esters of fatty acids and polyglycerolesters.

Examples of especially preferred non-ionic surfactants are ethoxylated alcohols (e.g. Brij 020-SO-(MV), Croda), ethopropoxylated alcohols (e.g. Agnique KE 3551, BASF), alkoxylated tristyrylphenols, ethoxylated tristyrylphenols (e.g. Soprophor TS/16, Rhodia), ethopropoxylated tristyrylphenols (e.g. Soprophor 796/P, Rhodia) and ethoxylated vegetable oils (e.g. Tanemul® KS, Tanatex Chemicals).

In an another particular preferred embodiment of the present invention the EC formulation comprises at least two types of non-ionic surfactants selected from the group consisting of at least one ethoxylated vegetable oil and at least one alkoxylated alcohol. Preferably, the alkoxylated alcohol is an ethopropoxylated alcohol and/or an ethopropoxylated tristyrylphenol. Preferably, the ethoxylated vegetable oil is a castor oil polyglycol ether.

In a even more preferred embodiment of the invention the EC formulation comprises at least three non-ionic surfactants wherein two are selected from the group of alkoxylated alcohol and one is selected from the group of an ethoxylated vegetable oil. Preferably, the alkoxylated alcohol is an ethopropoxylated alcohol and an ethopropoxylated tristyrylphenol. Preferably, the ethoxylated vegetable oil is a castor oil polyglycol ether.

Optionally, the EC formulation according to the invention comprises also - as an additional emulsifier component [component (c) of the invention] - an anionic surfactant as a salt of a multivalent cation, eg. calcium. Examples of such anionic surfactants are calcium salts of alkylarylsulfonates CALSOGEN® 4814 (Clariant), NANSA EVM 70/2E (Huntsmann) and Emulsifier 1371 A (Lanxess).

In a preferred embodiment of the present invention, the EC formulation according to the invention also comprises as a component (d) at least one organic solvent. In combination with compounds (a) to (c), solvent (d) should give preferably a homogeneous and even more preferably a clear EC formulation with good emulsifying properties upon dilution into water.

A suitable organic solvent (d) can be chosen from the group of organic water-unsoluble solvents. Such organic water-unsoluble solvents are preferably selected from the group consisting of aromatic hydrocarbons, aliphatic hydrocarbons, carboxylic acid esters, alcohols, polyalkylene glycols, esters of plant oils , glycerol ester oils and mixtures thereof.

Aromatic and aliphatic hydrocarbons such as hexane, cyclohexane, benzene, toluene, xylene, mineral oil or kerosin or substituted naphthalenes, mixtures of mono-and polyalkylated aromatics are commercially available under the registered trademarks Solvesso®, Shellsol®, Petrol Spezial®, Plurasolv® and Exxsol®.

Esters of plant oils, which are used as non-polar, water-immiscible solvents according to the present invention are, as a rule, alkyl esters obtainable from medium chained fatty acids by esterification with alkanols or by transesterification of the corresponding plant oils preferably in the presence of a lipase.

Glycerol ester oils are to be understood as meaning esters of saturated or unsaturated fatty acids with glycerol. Mono-, di-and triglycerides, and their mixtures, are suitable. Preference is given to fatty acid triglycerides.

In a preferred embodiment of the invention, the solvent (d) required for the EC formulations according to the invention is selected from the group of:
- C₁-C₄ alkyl ester (preferably methyl ester) of a C₅-C₂₀ (preferably C₉-C₁₈) saturated or unsaturated fatty acid or a mixture of such esters, or
- C₆-C₂₀-fatty acids mono-, di- and/or triglycerides.

Commercial formulations of such esters include Witconol® 1095 and Witconol® 2309 (methyl esters of plant oils, available from Witco Corporation), Emery 2219 (58% methyl oleate, 24% methyl stearate, 14% methyl linoleate, 4% methyl palmitate), Emerest 2301 (76% methyl oleate, 24% methyl esters of other C₁₄-C₁₈ fatty acids), Emery 2270 (70% methyl laurate, 28% methyl myristate, 1% methyl palmitate), and Emery 2209 (55% methyl caprylate, 40% methyl caprate, 3% methyl caproate, 2% methyl laurate) all available from Henkel Corporation, Emery Group; Stepan C₂₅ (methyl caprylate + methyl caprate), available from Stepan Company; KE-1870 (methyl oleate) and CE-810 (methyl caprylate + methyl caprate), available from Proctor & Gamble Company, Priolube 1400 (methyl oleate), available from Unichema; PAMAK W4 (tall oil fatty acids), available from Hercules Inc.; ACTINOL FAI and D30LR (tall oil fatty acids), available from Arizona Chemical Company; Kemester EX-1550 (methyl ester of polyoverized tall oil), Kemester 3695 (methyl ester of dimer acid), and Witconol 2301 methyl oleate, all available from Witco Corporation; Agnique ME 18 RD-F, available from BASF; and Synative ES ME SU (methyl ester of rapeseed oil fatty acid, also known as methyl canolate) available from BASF, octanoyl glyceride/decanoyl glyceride mixture Miglyol® 812 from Sasol.

Other suitable organic solvents (d) in which the compounds (a) to (c) are dissolved, may be water-soluble. They are preferably selected from the group consisting of water-soluble alcohols, polyalkylene glycols, alkylene carbonates and carboxylic acid esters (eg. citric acid esters, dibasic esters and lactate esters).

In a preferred embodiment, the present invention provides an EC formulation comprising (a) 10 to 90%, more preferably 15% to 70% by weight of one or more free fatty acid(s); (b) 1 to 50%; more preferably 5 to 25% by weight of one or more N-monoalkyl- and N,N-dialkyl-alkylcarboxamides and (c) 10 to 50% by weight; more preferably 5% to 40% by weight; most preferably 10% to 30% of at least one emulsifier component as described above. The ratio of free fatty acid(s) [component (a) of the invention] to the carboxamides [component (b) of the invention] is preferably between 0.5:1 to 15:1, more preferably 1:1 to 10:1, and most preferably 2:1 to 5:1.

The content of the at least one optional organic solvent (d) in the EC formulation according to the invention is preferably 0% to 90% by weight, more preferably 5% to 60% by weight and most preferably between 10% to 50% by weight.

Furthermore, the EC formulation according to the invention may optionally comprise additional components such as safeners, antioxidants, herbicides, fungicides, insecticides or other active pesticide ingredients, chemical stabilizers, viscosity controlling agents, thickeners, adhesives, fertilizers, perfumes, pigments, dyestuff, and so on.

Components which can be used in combination with the EC formulations according to the invention in mixed formulations or in the tank mix are, for example, known active compounds as they are described, for example, in Weed Research 26, 441-445 (1986), or "The Pesticide Manual", 15th edition, The British Crop Protection Council and the Royal Soc. of Chemistry, 2011.

Examples of active compounds which may be mentioned as herbicides or plant growth regulators which are known from the literature and which can be combined with the EC formulation according to the invention are the following:
Acetochlor, acibenzolar, acibenzolar-s-methyl, acifluorfen, acifluorfen-sodium, aclonifen, alachlor, allidochlor, alloxydim, alloxydim-sodium, ametryn, amicarbazone, amidochlor, amidosulfuron, aminopyralid, amitrole, ammoniumsulfamat, ancymidol, anilofos, asulam, atrazine, azafenidin, azimsulfuron, aziprotryn, BAH-043, BAS-140H, BAS-693H, BAS-714H, BAS-762H, BAS-776H, BAS-800H, beflubutamid, benazolin, benazolin-ethyl, bencarbazone, benfluralin, benfuresate, bensulide, bensulfuron-methyl, bentazone, benzfendizone, benzobicyclon, benzofenap, benzofluor, benzoylprop, bifenox, bilanafos, bilanafos-sodium, bispyribac, bispyribac-sodium, bromacil, bromobutide, bromofenoxim, bromoxynil, bromuron, buminafos, busoxinone, butachlor, butafenacil, butamifos, butenachlor, butralin, butroxydim, butylate, cafenstrole, carbetamide, carfentrazone, carfentrazone-ethyl, chlomethoxyfen, chloramben, chlorazifop, chlorazifop-butyl, chlorbromuron, chlorbufam, chlorfenac, chlorfenac-sodium, chlorfenprop, chlorflurenol, chlorflurenol-methyl, chloridazon, chlorimuron, chlorimuron-ethyl, chlormequat-chlorid, chlornitrofen, chlorophthalim, chlorthal-dimethyl, chlorotoluron, chlorsulfuron, cinidon, cinidon-ethyl, cinmethylin, cinosulfuron, clethodim, clodinafop clodinafop-propargyl, clofencet, clomazone, clomeprop, cloprop, clopyralid, cloransulam, cloransulam-methyl, cumyluron, cyanamide, cyanazine, cyclanilide, cycloate, cyclosulfamuron, cycloxydim, cycluron, cyhalofop, cyhalofop-butyl, cyperquat, cyprazine, cyprazole, 2,4-D, 2,4-DB, daimuron/dymron, dalapon, daminozide, dazomet, n-decanol, desmedipham, desmetryn, detosyl-pyrazolate (DTP), diallate, dicamba, dichlobenil, dichlorprop, dichlorprop-p, diclofop, diclofopmethyl, diclofop-p-methyl, diclosulam, diethatyl, diethatyl-ethyl, difenoxuron, difenzoquat, diflufenican, diflufenzopyr, diflufenzopyr-sodium, dimefuron, dikegulac-sodium, dimefuron, dimepiperate, dimethachlor, dimethametryn, dimethenamid, dimethenamid-p, dimethipin, dimetrasulfuron, dinitramine, dinoseb, dinoterb, diphenamid, dipropetryn, diquat, diquat-dibromide, dithiopyr, diuron, DNOC, eglinazine-ethyl, endothal, eptc, esprocarb, ethalfluralin, ethametsulfuron-methyl, ethephon, ethidimuron, ethiozin, ethofumesate, ethoxyfen, ethoxyfen-ethyl, ethoxysulfuron, etobenzanid, F-5331, i.e. N-[2-chlor-4-fluor-5-[4-(3fluorpropyl)-4,5-dihydro-5-oxo-1H-tetrazol-1-yl]-phenyl]-ethansulfonamid, fenoprop, fenoxaprop, fenoxaprop-p, fenoxaprop-ethyl, fenoxaprop-p-ethyl, fentrazamide, fenuron, flamprop, flamprop-m-isopropyl, flamprop-m-methyl, flazasulfuron, florasulam, fluazifop, fluazifop-p, fluazifop-butyl, fluazifop-p-butyl, fluazolate, flucarbazone, flucarbazone-sodium, flucetosulfuron, fluchloralin, flufenacet (thiafluamide), flufenpyr, flufenpyr-ethyl, flumetralin, flumetsulam, flumiclorac, flumiclorac-pentyl, flumioxazin, flumipropyn, fluometuron, fluorodifen, fluoroglycofen, fluoroglycofen-ethyl, flupoxam, flupropacil, flupropanate, flupyrsulfuron, flupyrsulfuron-methyl-sodium, flurenol, flurenol-butyl, fluridone, flurochloridone, fluroxypyr, fluroxypyr-meptyl, flurprimidol, flurtamone, fluthiacet, fluthiacet-methyl, fluthiamide, fomesafen, foramsulfuron, forchlorfenuron, fosamine, furyloxyfen, gibberellinic acid, glufosinate, 1-glufosinate, 1-glufosinate-ammonium, glufosinate-ammonium, glyphosate, glyphosate-isopropylammonium, H-9201, halosafen, halosulfuron, halosulfuron-methyl, haloxyfop, haloxyfop-p, haloxyfop-ethoxyethyl, haloxyfop-p-ethoxyethyl, haloxyfop-methyl, haloxyfop-p-methyl, hexazinone, hnpc-9908, HOK-201, HW-02, imazamethabenz, imazamethabenz-methyl, imazamox, imazapic, imazapyr, imazaquin, imazethapyr, imazosulfuron, inabenfide, indanofan, indolacetic acid (IAA), 4-indol-3-yl- butanoic acid (IBA), iodosulfuron, iodosulfuron-methyl-sodium, ioxynil, isocarbamid, isopropalin, isoproturon, isouron, isoxaben, isoxachlortole, isoxaflutole, isoxapyrifop, IDH-100, KUH-043, KUH-071, karbutilate, ketospiradox, lactofen, lenacil, linuron, maleinic acid hydrazid, MCPA, MCPB, MCPB-methyl, -ethyl und -sodium, mecoprop, mecoprop-sodium, mecoprop-butotyl, mecoprop-p-butotyl, mecoprop-p-dimethylammonium, mecoprop-p-2-ethylhexyl, mecoprop-p-kalium, mefenacet, mefluidide, mepiquat-chlorid, mesosulfuron, mesosulfuron-methyl, mesotrione, methabenzthiazuron, metam, metamifop, metamitron, metazachlor, methazole, methoxyphenone, methyldymron, 1-methylcyclopropen, methylisothiocyanat, metobenzuron, metobenzuron, metobromuron, metolachlor, s-metolachlor, metosulam, metoxuron, metribuzin, metsulfuron, metsulfuron-methyl, molinate, monalide, monocarbamide, monocarbamide-dihydrogensulfat, monolinuron, monosulfuron, monuron, MT 128, MT-5950, i.e. N-[3-chlor-4-(1-methylethyl)-phenyl]-2-methylpentanamide, NGGC-011, naproanilide, napropamide, naptalam, NC-310, i.e. 4-(2,4-dichlorobenzoyl)-1-methyl-5-benzyloxypyrazole, neburon, nicosulfuron, nipyraclofen, nitralin, nitrofen, nitrophenolat-sodium (mixture of isomers), nitrofluorfen, nonanoic acid, norflurazon, orbencarb, orthosulfamuron, oryzalin, oxadiargyl, oxadiazon, oxasulfuron, oxaziclomefone, oxyfluorfen, paclobutrazol, paraquat, paraquat-dichlorid, pelargonic acid (nonanoic acid), pendimethalin, pendralin, penoxsulam, pentanochlor, pentoxazone, perfluidone, pethoxamid, phenisopham, phenmedipham, phenmedipham-ethyl, picloram, picolinafen, pinoxaden, piperophos, pirifenop, pirifenop-butyl, pretilachlor, primisulfuron, primisulfuron-methyl, probenazole, profluazol, procyazine, prodiamine, prifluraline, profoxydim, prohexadione, prohexadione-calcium, prohydrojasmone, prometon, prometryn, propachlor, propanil, propaquizafop, propazine, propham, propisochlor, propoxycarbazone, propoxycarbazone-sodium, propyzamide, prosulfalin, prosulfocarb, prosulfuron, prynachlor, pyraclonil, pyraflufen, pyraflufen-ethyl, pyrasulfotole, pyrazolynate (pyrazolate), pyrazosulfuron-ethyl, pyrazoxyfen, pyribambenz, pyribambenz-isopropyl, pyribenzoxim, pyributicarb, pyridafol, pyridate, pyriftalid, pyriminobac, pyriminobac-methyl, pyrimisulfan, pyrithiobac, pyrithiobac-sodium, pyroxasulfone, pyroxsulam, quinclorac, quinmerac, quinoclamine, quizalofop, quizalofop-ethyl, quizalofop-p, quizalofop-p-ethyl, quizalofop-p-tefuryl, rimsulfuron, secbumeton, sethoxydim, siduron, simazine, simetryn, SN-106279, sulcotrione, sulfallate (cdec), sulfentrazone, sulfometuron, sulfometuron-methyl, sulfosate (glyphosate-trimesium), sulfosulfuron, SYN-523, SYP-249, SYP-298, SYP-300, tebutam, tebuthiuron, tecnazene, tefuryltrione, tembotrione, tepraloxydim, terbacil, terbucarb, terbuchlor, terbumeton, terbuthylazine, terbutryn, th-547, thenylchlor, thiafluamide, thiazafluron, thiazopyr, thidiazimin, thidiazuron, thiencarbazone, thiencarbazone-methyl, thifensulfuron, thifensulfuron-methyl, thiobencarb, tiocarbazil, topramezone, tralkoxydim, triallate, triasulfuron, triaziflam, triazofenamide, tribenuron, tribenuron-methyl, trichlor acetic acid (tca), triclopyr, tridiphane, trietazine, trifloxysulfuron, trifloxysulfuron-sodium, trifluralin, triflusulfuron, triflusulfuron-methyl, trimeturon, trinexapac, trinexapac-ethyl, tritosulfuron, tsitodef, uniconazole, uniconazole-p, vernolate, ZJ-0166, ZJ-0270, ZJ-0543, ZJ-0862 , as well as the following compounds.

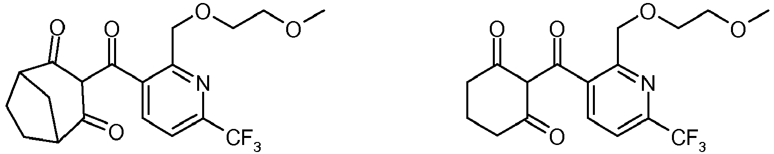

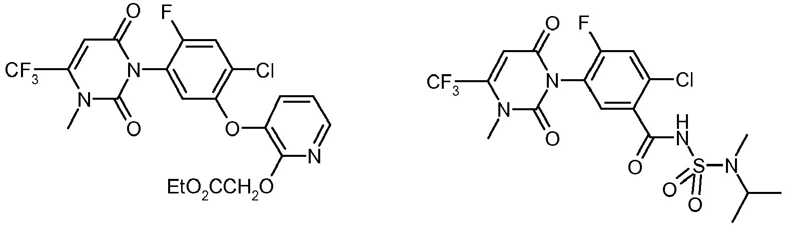

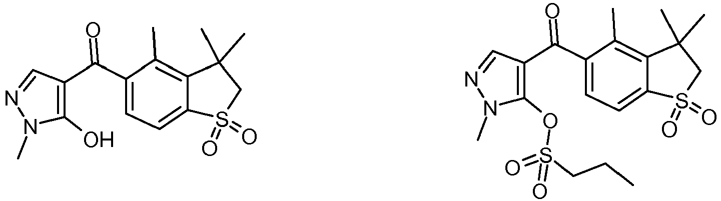

Common names are used in accordance with the International Organization for Standardization (ISO) or the chemical names, if appropriate together with a customary code number, of the compounds and always comprise all applicable forms such as acids, salts, ester, oder modifications such as isomers, like stereoisomers and optical isomers.

Another aspect of the invention is a process for the preparation of the EC formulations according to the invention as described hereinbefore which comprises mixing all the components in a suitable mixing device.

The EC formulations of the present invention can be prepared by mixing (a) one or more fatty acid(s) (b) one or more N-monoalkyl- and N,N-dialkyl-alkylcarboxamide(s) of formula (I) and (c) the hereinbefore described at least one emulsifier component(s) and optionally (d) at least one organic solvent, and optionally (e) additional components. There are no specific mixing condition requirements, and the components of the EC formulation according to the invention do not need to be added in any particular order.

The EC formulations of the present invention are typically utilized as emulsifiable concentrates, namely they are diluted with water to give an emulsion and applied to weeds.

The diluted aqueous composition of the EC formulations according to the invention have excellent herbicidal efficacy against a broad spectrum of economically important monocotyledonous and dicotyledonous annual harmful plants. The diluted aqueous composition act efficiently even on perennial harmful plants which produce shoots from rhizomes, root stocks and other perennial organs and which are difficult to control.

Specific examples may be mentioned of some representatives of the monocotyledonous and dicotyledonous weed flora which can be controlled by the diluted aqueous composition of the EC formulation according to the invention, without the enumeration being restricted to certain species. Monocotyledonous harmful plants of the genera: *Aegilops, Agropyron, Agrostis, Alopecurus, Apera, Avena, Brachiaria, Bromus*, *Cenchrus, Commelina*, *Cynodon, Cyperus, Dactyloctenium, Digitaria, Echinochloa, Eleocharis, Eleusine, Eragrostis, Erio-chloa, Festuca, Fimbristylis*, *Heteranthera, Imperata*, *Ischaemum*, *Leptochloa, Lolium*, *Monochoria, Panicum*, *Paspalum*, *Phalaris, Phleum*, *Poa, Rottboellia, Sagittaria, Scirpus, Setaria, Sorghum*.

Dicotyledonous weeds of the genera: *Abutilon, Amaranthus, Ambrosia*, *Anoda, Anthemis*, *Aphanes, Artemisia, Atriplex, Bellis, Bidens, Capsella, Carduus, Cassia, Centnuren, Chenopodium*, *Cirsium, Convolvulus*, *Datura, Desmodium*, *Emex*, *Erysimum*, *Euphorbia, Galeopsis, Galinsoga, Galium*, *Hibiscus, Ipomoea*, *Kochia, Lamium, Lepidium*, *Lindernin, Matricaria, Mentha, Mercurialis, Mullugo, Myosotis, Papaver*, *Pharbitis, Plantago, Polygonum, Portulaca, Ranunculus, Raphanus, Rorippa, Rotala, Rumex*, *Salsola, Senecio, Sesbania, Sida, Sinapis, Solanum, Sonchus, Sphenoclea, Stellaria, Taraxacum*, *Thlaspi, Trifolium*, *Urtica, Veronica, Viola, Xanthium*.

The diluted aqueous composition of the EC formulation of the invention is also efficient against moss. Specific examples may be mentioned of some representatives of the mosses which can be controlled by the diluted aqueous composition of the EC formulation according to the invention, without the enumeration being restricted to certain species: *Polotrichum commune*, *Tortula fyturwlis, Hypnum cypressiforme, Grimmia pulvinata*, *Calliergonella cuspidate, Pseudoscleropodium purum*, *Brachythecium rutabulum*, *Rhytidindelphus triquetrus* and *Rhytidindelphus squarrosus*.

The diluted aqueous composition of the EC formulation of the invention can also be used as effective for the removal of green algae, lichen, mould and fungal stains from all kinds of hard surfaces, including concrete, brick paving, patios, paths, fences, sheds, greenhouse and conservatory glass.

By virtue of their herbicidal and plant-growth-regulatory properties, the EC formulation of the invention can also be employed for controlling harmful plants in crops of genetically modified plants or plants modified by conventional mutagenesis. In general, the transgenic plants are distinguished by especially advantageous properties, for example by resistances to certain pesticides, mainly certain herbicides, resistances to plant diseases or causative organisms of plant diseases, such as certain insects or microorganisms such as fungi, bacteria or viruses. Other specific characteristics relate, for example, to the harvested material with regard to quantity, quality, storability, composition and specific constituents. Thus, transgenic plants are known whose starch content is increased, or whose starch quality is altered, or those where the harvested material has a different fatty acid composition.

As commodities, the inventive EC formulation are in a concentrated form whereas the end-user generally employs diluted compositions. Said EC compositions may be diluted to concentrations down to 1.0 to 5% of active ingredient (the at least one fatty acid). The doses usually are in the range of about 5 to 50 kg a.i./ha.

One of ordinary skill in the art could determine an appropriate application dosage, which may vary with crop, objective weeds, weather conditions and so on.

Further, the invention also concerns a method of combating unwanted plants at a foliar locus which comprises treating the foliar locus with a composition obtained from emulsifying an EC formulation according to the invention in water. The term "unwanted plants" preferably refers to pest plants and/or weeds. The term " foliar locus" refers to the foliar parts of plants .

Moreover, the invention relates to the use of an EC formulations according to the invention as a pesticide, preferably as a herbicide and/or dessicants.

For a clearer understanding of the invention, specific examples are set forth below.

### Examples:

### Example 1: Preparation of the EC-Formulations according to the Invention and comparative EC-Formulations:

Herbicidal emulsifiable concentrates (EC) were prepared having the following compositions:

**Table 1: Different EC Formulations of the Invention and comparative EC Formulations; =**

| | **FL 1** | **FL 2** | **FL 3** | **FL 4** |
|---|---|---|---|---|
| **Components** | **w/w %** | **w/w %** | **w/w %** | **w/w %** |
| Palmera A5608® | 30 | 30 | 60 | 60 |
| Genagen 4296® | 0 | 10 | 0 | 20 |
| Synative ES ME SU® | 45 | 35 | 15 | 0 |
| Emulsifier blend | 25 | 25 | 25 | 20 |
| **Sum** | 100 | 100 | 100 | 100 |
| Dilution rate (ml/l) | 100 | 100 | 50 | 50 |
| Application rate (l/ha) (of the diluted aqueous composition) | 500 | 500 | 500 | 500 |

Comparative Formulation 1, FL 2 = Formulation 2, FL 3 = Comparative Formulation 3, FL4 = Formulation 4.

Palmera A5608® is a caprylic/capric acid mixture (*67762-36-1)* from Croda, Genagen 4296^{®} a N,N - dimethyl fatty acid amide (14433-76-2) from Clariant and Synative ES ME SU^{®} a rapeseed oil methylester from Cognis. For all formulations, the same emulsifier blend consisting of two different alkoxylated alcohols (an ethopropoxylated alcohol and an ethopropoxylated tristyrylphenol) and one ethoxylated vegetable oil (castor oil polyglycol ether) has been used. Preparation was done by homogeneously mixing all ingredients to obtain a clear solution.

### Example 2: Biological Efficacy of the EC-Formulations according to the Invention:

18 different monocot and dicot weed and crop plants were grown in 3 cms diameter by 5 cms length pots. These plants were kept in a greenhouse under controlled environmental conditions. In order to study the influence of the temperature on the herbicidal efficacy, plants were kept at different temperatures (14/11°C versus 25/22°C at day/night). Water was supplied as required.

Formulations according to preparation example 1 were diluted with water according the dilution rate and subsequently applied with an application rate of the spray solution as indicated for each example (see table 1). Resulting dilutions were left in a rotator plate during 24 hours. Afterwards, they were sprayed to the aforementioned plant species in a spray cabinet (Spritzkabine S0631; Ingenieurbüro Check Tec; Germany) using the following parameters: nozzle AI11004-VS, 500 L/ha, 3 bars, 2 km/h. The distance of the nozzle from the plants was 40 cms.

Each plant was individually qualified with an index of damage (injury) in order to differentiate biological performance of the treatments. The index ranged from 0 to 3, where 0 = no damage, 1 = slight wilting, 2 = heavy wilting, beginning of leaf curly and change of color and 3 = loss of turgor, chlorosis/necrosis. The index showed in the following examples is the average index of the 18 treated plants. An index of damage equal or lower than 0.5 is considered as not having significant herbicide effect. Differences of 0.3 units in the index of damage are considered as relevant to differentiate treatments. The injury of the treated plants was evaluated 11 days after application and given in following table.

**Table 2: Biological Efficacy Tests with Formulations of the Invention and comparative EC Formulations; FL1 = Comparative Formulation 1, FL 2 = Formulation 2, FL 3 = Comparative Formulation 3, FL4 = Formulation 4.**

| | **FL 1** | | **FL 2** | | **FL 3** | | **FL 4** | |
|---|---|---|---|---|---|---|---|---|
| **Temperature (day/night)** | 14/11°C | 25/22°C | 14/11°C | 25/22°C | 14/11°C | 25/22°C | 14/11°C | 25/22°C |
| 11 days after treatment | 1,3 | 1,2 | 1,7 | 1,8 | 1,6 | 1,3 | 1,7 | 1,9 |

All tested Formulations of the Invention show a herbicide effect (see table 2). The results further indicate that Genagen 4296^{®} works as an adjuvant to improve the biological efficacy of the active ingredient (fatty acid). FL1 and FL3 with no Genagen 4296^{®} in comparison with FL2 and FL4 with Genagen 4296^{®} have a lower biological efficacy 11 days after treatment.

### Example 3: Biological Efficacy of the EC-Formulation of the Invention in comparison with a Non-Inventive SL-Formulation:

In a separate trial, the biological efficacy of sample FL 1 and FL 2 from example 1 was tested in comparison to a non-inventive aqueous herbicidal soluble liquid (SL) formulation (= FL 5) with the same active ingredient content, having following composition:

**Table 3: Components of the non-inventive SL-Formulation (= FL 5).**

| | **FL 5** |
|---|---|
| **Components** | **w/w %** |
| Palmera A5608® | 30 |
| Ammonia solution (25%) | 14 |
| Water | 56 |
| **Sum** | 100 |
| Dilution rate (ml/l) | 100 |
| Application rate (l/ha) | 500 |

FL 5 (comparative formulation) prepared and applied similarly as formulations FL 1 to FL 4. Diluation and application rate are indicated in table 3. The results of the biological testing (according to the procedure of example 2) is given in following table 4:

**Table 4: Comparison of Biological Efficacy of EC-Formulations according to the Invention (FL 2) with the non-inventive Formulations (FL1 and FL 5).**

| | **FL 1** | | **FL 2** | | **FL 5** | |
|---|---|---|---|---|---|---|
| **Temperature (day/night)** | 14/11°C | 25/22°C | 14/11°C | 25/22°C | 14/11°C | 25/22°C |
| 11 days after treatment | 2,0 | 1,7 | 2,4 | 1,9 | 1,6 | 1,7 |

In this trial, the improved biological efficacy of the EC concept (FL 2) versus the aqueous SL formulation concept (FL 5) and FL 1 (EC formulation without Genagen 4296®) is demonstrated by the efficacy data.

### Example 4: Rainfastness of the EC Formulation of the Invention:

The biological efficacy of both herbicidal emulsifiable concentrates FL 3 and 4 from example 1 was tested in an outdoor field trial. This trial was conducted as outdoor field trial with 3 repeats and a plot size of 6 square meters on naturally occurring weed populations. Four plant species (monocotyl and dicotyl target plants) with their growth stage at the time of application of the EC-formulations and their occurrence at the time of application of the EC-formulations are listed in following table 5.

**Table 5: List of Target Plants and Average % Coverage before Application of FL 3 and FL 4.**

| **Target Plant** | **Type** | **Average % Coverage in untreated before Application of FL 3 & 4** |
|---|---|---|
| *Trifolium repens* | Dicotyledon | 25% |
| *Plantago major* | Dicotyledon | 13% |
| *Ranunculus repens* | Dicotyledon | 12% |
| *Poa pratensis* | Monocotyledon | 12% |

Spray slurries were prepared by diluting products FL 1 and FL 2 in tap water (50 ml product in 1L spray solution). Application was performed once per trial using an air pressure operated sprayer boom, applying a slurry volume of 1000 Liter/ha.

Target plants (see table 5) were evaluated by damaged (chlorotic or necrotic) leaf area on days after application ranging from 1 to 28 days. Herbicidal efficacy is displayed as an average over all 4 visual assessments.

Rain was simulated by sprinkling the plots with a watering can 3 hours after application, applying a water amount equivalent to 3 mm rain. Each formulation was applied on plots with rain and on plots without rain.

The results of the damage assessment are given in following table 6.

**Table 6: Rain Fastness of FL 3 and FL 4. High rates of reduction of efficacy means low rainfastness of the product.**

| **Herbicidal Efficacy [%]** | **FL 3** | **FL 4** |
|---|---|---|
| Dry | 55 | 56 |
| 3 mm rain | 50 | 55 |
| Reduction of efficacy [%] | 10 | 2 |

The results show that Genagen 4296^{®} (FL 4) works as an adjuvant to improve the rainfastness of the the emulsifiable concentrate formulation (in comparison to FL 3 which does not contain Genagen 4296^{®}).

### Example 5: In-vitro Skin Irritation of the EC-Formulation of the Invention:

The skin irritation potential of the formulations FL 1 to FL 4 (see example 1) containing fatty acid (Palmera A5608®) with and without a dimethyl fatty acid amide (Genagen 4296^{®}) have been assessed by using an in-vitro skin irritation method.

Palmera A5608® is labeled R34 (causes burns), Genagen 4296^{®} is labeled R38, (irritating to skin) and R41 (risk of serious eye damage). Risk R-phrases (such as R34, R38, R41 are defined in Annex III of European Union Directive 67/548/EEC: Nature of special risks attributed to dangerous substances and preparations. The list was consolidated and republished in Directive 2001/59/EC).

These EC formulations FL 1 to FL 4 were tested in comparison to the aqueous herbicidal soluble liquid (SL) formulation FL 5 from example 2 and the commercial product Scythe^{®} from Dow AgroSciences LLC (batch number: Dow UC14162N05). Scythe^{®} is a fatty acid emulsifiable concentrate marketed for control or burndown of a broad spectrum of weeds on contact. It contains in total 60% fatty acids, mainly pelargonic acid (57%). It is labeled to cause substantial but temporary eye injury and skin irritation.

The in-vitro skin irritation test was carried out according to the OECD method TG 439 (EC amending Council Directive 440/2008/EEC, B.46 In-vitro Skin irritation). Therefore, sufficient amount of FL 1 to FL 5 and Scythe^{®} was applied to uniformly cover the three-dimensional reconstructed human *epidermis* (RhE, from CellSystems^{®} Biotechnologie Vertrieb GmbH) for an exposure period of 20 minutes. Subsequently, the RhE epidermis was carefully washed with a 0.9% NaCl solution to completely remove the test substance and incubated for 42 hours at 37°C. Cell viability in RhE epidermis models is measured by a staining technique using a vital dye (MTT, CAS number 298-93-1). Chemicals that produce cell viabilities above the defined threshold level of 50% can be considered as non-irritants. Details of the method are described in the OECD guideline TG 439 for testing of chemicals.

The results of the tested formulations are given in following table 7 and 8:

**Table 7: In-vitro Skin Irritation results for FL 1 to FL 4.**

| | **FL 1** | **FL 2** | **FL 3** | **FL 4** |
|---|---|---|---|---|
| Cell viability [%] | 17,3 | 95,8 | 25,6 | 59,2 |
| Skin irritation classification | irritant | non-irritant | irritant | non-irritant |

**Table 8: In-vitro Skin Irritation results for FL 5 and Scythe^{®}.**

| | **FL 5** | **Scythe ® (Dow UC14162N05)** |
|---|---|---|
| Cell viability [%] | 0,9 | 11,4 |
| Skin irritation classification | irritant | irritant |

The results show that both emulsifiable fatty acid concentrates FL 1 and FL 3 behave similar as the aqueous soluble liquid formulation (FL 5) and the commercial product Scythe^{®}, they all can be considered as irritant. In contrast however, the invented emulsifiable fatty acid concentrates FL 2 and FL 4 containing the irritating adjuvant Genagen 4296^{®} can be surprisingly considered as non-irritant.

## Claims

1. An Emulsifiable Concentrate (EC) formulation comprising
(a) at least one fatty acid, wherein the at least one fatty acid is in its free fatty acid form and has herbicidal activity,
(b) one or more N-monoalkyl- and N,N-dialkyl-alkylcarboxamide(s) of the formula (I):
R¹--CO--NR²-R³ (I)
in which
R¹ represents an unbranched, saturated alkyl group having 5 to 11 carbon atoms,
R² represents C₁-C₆-alkyl and
R³ represents H or C₁-C₆-alkyl and
(c) at least one emulsifier component.

2. An Emulsifiable Concentrate (EC) formulation according to claim 1, wherein the at least one fatty acid is selected from the group of caprylic, pelargonic and capric acids or mixtures of caprylic, pelargonic, capric and lauric acids.

3. An Emulsifiable Concentrate (EC) formulation according to one of the claims 1 to 2, wherein the at least one emulsifier component is at least one non-ionic surfactant.

4. An Emulsifiable Concentrate (EC) formulation according to claim 3, wherein the at least one non-ionic surfactant is selected from the group of alkoxylated alcohols, ethoxylated alcohols, ethopropoxylated alcohols, alkylphenolethoxylates, alkoxylated tristyrylphenols, alkoxylated tributylphenols, alkylaminethoxylates, ethoxylated vegetable oils including their hydrogenates, polyadducts of ethylene oxide and propylene oxide, ethoxylated fatty acids, nonionic polymeric surfactants, sorbitan esters and their ethoxylates, sorbitolesters, propylene glycol esters of fatty acids and polyglycerolesters.

5. An Emulsifiable Concentrate (EC) formulation according to one of the claims 1 to 4, wherein the at least one fatty acid is a mixture of caprylic and capric acid.

6. An Emulsifiable Concentrate (EC) formulation according to one of the claim 1 to 5, wherein the one or more N-monoalkyl- and N,N-dialkyl-alkylcarboxamide(s) is N,N-dimethyl-n-decanamide or a mixture of N,N-dimethyl-n-octanamide and N,N-dimethyl-n-decanamide.

7. An Emulsifiable Concentrate (EC) formulation according to one of the claims 1 to 6, wherein the non-ionic surfactant(s) are at least two types of non-ionic surfactants which are selected from the group consisting of at least one ethoxylated vegetable oil and at least one alkoxylated alcohol and wherein the ethoxylated vegetable oil is a castor oil polyglycol ether and the alkoxylated alcohol is an ethopropoxylated alcohol and/or an ethopropoxylated tristyrylphenol.

8. An Emulsifiable Concentrate (EC) formulation according to one of the claim 1 to 7, wherein the formulation further comprises at least one organic solvent.

9. Diluted aqueous composition comprising an Emulsifiable Concentrate (EC) formulation according to one of the claims 1 to 8.

10. Method of combating unwanted plants at a foliar locus which comprises treating the foliar locus with a diluted aqueous composition according to claim 9 or a composition obtained from emulsifying a Emulsifiable Concentrate (EC) formulation according to one of the claims 1 to 8 in water.

11. Use of a diluted aqueous composition according to claim 9 as a herbicide and/or dessicant.

12. Method to produce the Emulsifiable Concentrate (EC) formulation according to claim 1 by mixing
(a) at least one fatty acid, wherein the at least one fatty acid is in its free fatty acid form and has herbicidal activity,
(b) one or more N-monoalkyl- and N,N-dialkyl-alkylcarboxamide(s) of the formula (I):
R¹--CO--NR²-R³ (I)
in which
R¹ represents an unbranched, saturated alkyl group having 5 to 11 carbon atoms,
R² represents C₁-C₆-alkyl and
R³ represents H or C₁-C₆-alkyl and
(c) at least one at least one emulsifier component.

## Patentansprüche

1. Emulsionskonzentrat(EC)-Formulierung, umfassend:
(a) mindestens eine Fettsäure, wobei die mindestens eine Fettsäure in ihrer freien Fettsäureform vorliegt und herbizide Wirkung hat,
(b) ein oder mehrere N-Monoalkyl- und N,N-Dialkylalkylcarbonsäureamide der Formel (I) :
R¹--CO--NR²R³ (I),
in welcher
R¹ für eine geradkettige gesättigte Alkylgruppe mit 5 bis 11 Kohlenstoffatomen steht,
R² für C₁-C₆-Alkyl steht und
R³ für H oder C₁-C₆-Alkyl steht, und
(c) mindestens eine Emulgatorkomponente.

2. Emulsionskonzentrat(EC)-Formulierung nach Anspruch 1, wobei die mindestens eine Fettsäure ausgewählt ist aus der Gruppe bestehend aus Caprylsäure, Pelagonsäure und Caprinsäure bzw. Mischungen von Caprylsäure, Pelagonsäure, Caprinsäure und Laurylsäure.

3. Emulsionskonzentrat(EC)-Formulierung nach Anspruch 1 oder 2, wobei es sich bei der mindestens einen Emulgatorkomponente um mindestens ein nichtionisches Tensid handelt.

4. Emulsionskonzentrat(EC)-Formulierung nach Anspruch 3, wobei das mindestens eine nichtionische Tensid ausgewählt ist aus der Gruppe bestehend aus alkoxylierten Alkoholen, ethoxylierten Alkoholen, ethopropoxylierten Alkoholen, Alkylphenolethoxylaten, alkoxylierten Tristyrylphenolen, alkoxylierten Tributylphenolen, Alkylaminethoxylaten, ethoxylierten Pflanzenölen einschließlich ihrer Hydrogenate, Polyaddukten von Ethylenoxid und Propylenoxid, ethoxylierten Fettsäuren, nichtionischen polymeren Tensiden, Sorbitanestern und ihren Ethoxylaten, Sorbitolestern, Propylenglykolestern von Fettsäuren und Polyglycerinestern.

5. Emulsionskonzentrat(EC)-Formulierung nach einem der Ansprüche 1 bis 4, wobei es sich bei der mindestens einen Fettsäure um eine Mischung von Caprylsäure und Caprinsäure handelt.

6. Emulsionskonzentrat(EC)-Formulierung nach einem der Ansprüche 1 bis 5, wobei es sich bei dem einen oder den mehreren N-Monoalkyl- und N,N-Dialkylalkylcarbonsäureamiden um N,N-Dimethyl-n-decanamid oder eine Mischung von N,N-Dimethyl-n-octanamid und N,N-Dimethyl-n-decanamid handelt.

7. Emulsionskonzentrat(EC)-Formulierung nach einem der Ansprüche 1 bis 6, wobei es sich bei dem nichtionischen Tensid/den nichtionischen Tensiden um mindestens zwei Typen nichtionischer Tenside ausgewählt aus der Gruppe bestehend aus mindestens einem ethoxylierten Pflanzenöl und mindestens einem alkoxylierten Alkohol handelt, wobei es sich bei dem ethoxylierten Pflanzenöl um Rizinusölpolyglykolether handelt und es sich bei dem alkoxylierten Alkohol um einen ethopropoxylierten Alkohol und/oder ein ethopropoxyliertes Tristyrylphenol handelt.

8. Emulsionskonzentrat(EC)-Formulierung nach einem der Ansprüche 1 bis 7, wobei die Formulierung weiterhin mindestens ein organisches Lösungsmittel umfasst.

9. Verdünnte wässrige Zusammensetzung, welche eine Emulsionskonzentrat(EC)-Formulierung nach einem der Ansprüche 1 bis 8 umfasst.

10. Verfahren zur Bekämpfung unerwünschter Pflanzen an einem Blattort, bei dem man den Blattort mit einer verdünnten wässrigen Zusammensetzung nach Anspruch 9 oder einer durch Emulgieren einer Emulsionskonzentrat(EC)-Formulierung nach einem der Ansprüche 1 bis 8 in Wasser erhaltenen Zusammensetzung behandelt.

11. Verwendung einer verdünnten wässrigen Zusammensetzung nach Anspruch 9 als Herbizid und/oder Austrocknungsmittel.

12. Verfahren zur Herstellung der Emulsionskonzentrat(EC)-Formulierung nach Anspruch 1 durch Mischen
(a) mindestens einer Fettsäure, wobei die mindestens eine Fettsäure in ihrer freien Fettsäureform vorliegt und herbizide Wirkung hat,
(b) eines oder mehrerer N-Monoalkyl- und N,N-Dialkylalkylcarbonsäureamide der Formel (I):
R¹--CO--NR²R³ (I),
in welcher
R¹ für eine geradkettige gesättigte Alkylgruppe mit 5 bis 11 Kohlenstoffatomen steht,
R² für C₁-C₆-Alkyl steht und
R³ für H oder C₁-C₆-Alkyl steht, und
(c) mindestens einer Emulgatorkomponente.

## Revendications

1. Formulation de concentré émulsionnable (CE) comprenant
(a) au moins un acide gras, l'au moins un acide gras étant sous sa forme d'acide gras libre et ayant une activité herbicide,
(b) un ou plusieurs *N*-monoalkyl-alkylcarboxamides ou *N,N*-dialkyl-alkylcarboxamides représentés par la formule (I) :
R¹--CO--NR²R³ (I)
dans laquelle
R¹ représente un groupe alkyle non ramifié saturé ayant 5 à 11 atomes de carbone,
R² représente un groupe alkyle en C₁-C₆ et
R³ représente H ou un groupe alkyle en C₁-C₆ et
(c) au moins un composant émulsifiant.

2. Formulation de concentré émulsionnable (CE) selon la revendication 1, dans laquelle l'au moins un acide gras est choisi dans le groupe des acides caprylique, pélargonique et caprique ou des mélanges d'acides caprylique, pélargonique, caprique et laurique.

3. Formulation de concentré émulsionnable (CE) selon l'une des revendications 1 à 2, dans laquelle l'au moins un composant émulsifiant est au moins un tensioactif non ionique.

4. Formulation de concentré émulsionnable (CE) selon la revendication 3, dans laquelle l'au moins un tensioactif non ionique est choisi dans le groupe des alcools alcoxylés, des alcools éthoxylés, des alcools éthoxylés et propoxylés, des produits d'éthoxylation d'alkylphénols, des tristyrylphénols alcoxylés, des tributylphénols alcoxylés, des produits d'éthoxylation d'alkylamines, des huiles végétales éthoxylées y compris leurs produits d'hydrogénation, des produits de polyaddition d'oxyde d'éthylène et d'oxyde de propylène, des acides gras éthoxylés, des tensioactifs polymères non ioniques, des esters de sorbitane et de leurs produits d'éthoxylation, des esters de sorbitol, des esters de propylèneglycol et d'acides gras et des esters de polyglycérol.

5. Formulation de concentré émulsionnable (CE) selon l'une des revendications 1 à 4, dans laquelle l'au moins un acide gras est un mélange d'acide caprylique et d'acide caprique.

6. Formulation de concentré émulsionnable (CE) selon l'une des revendications 1 à 5, dans laquelle le ou les *N*-monoalkyl-alkylcarboxamides ou *N,N*-dialkyl-alkylcarboxamides sont le *N,N*-diméthyl-n-décanamide ou un mélange de *N,N*-diméthyl-n-octanamide et de *N,N*diméthyl-*n*-décanamide.

7. Formulation de concentré émulsionnable (CE) selon l'une des revendications 1 à 6, dans laquelle le ou les tensioactifs non ioniques sont au moins deux types de tensioactifs non ioniques qui sont choisis dans le groupe constitué par au moins une huile végétale éthoxylée et au moins un alcool alcoxylé et dans laquelle l'huile végétale éthoxylée est un éther de polyglycol et d'huile de ricin et l'alcool alcoxylé est un alcool éthoxylé et propoxylé et/ou un tristyrylphénol éthoxylé et propoxylé.

8. Formulation de concentré émulsionnable (CE) selon l'une des revendications 1 à 7, la formulation comprenant en outre au moins un solvant organique.

9. Composition aqueuse diluée comprenant une formulation de concentré émulsionnable (CE) selon l'une des revendications 1 à 8.

10. Procédé de lutte contre des plantes indésirables au niveau d'une partie foliaire qui comprend le traitement de la partie foliaire avec une composition aqueuse diluée selon la revendication 9 ou une composition obtenue à partir de l'émulsification d'une formulation de concentré émulsionnable (CE) selon l'une des revendications 1 à 8 dans de l'eau.

11. Utilisation d'une composition aqueuse diluée selon la revendication 9 comme herbicide et/ou agent siccatif.

12. Procédé pour produire la formulation de concentré émulsionnable (CE) selon la revendication 1 par mélange de
(a) au moins un acide gras, l'au moins un acide gras étant sous sa forme d'acide gras libre et ayant une activité herbicide,
(b) un ou plusieurs *N*-monoalkyl-alkylcarboxamides ou *N,N*-dialkyl-alkylcarboxamides représentés par la formule (I) :
R¹--CO--NR²R³ (I)
dans laquelle
R¹ représente un groupe alkyle non ramifié saturé ayant 5 à 11 atomes de carbone,
R² représente un groupe alkyle en C₁-C₆ et
R³ représente H ou un groupe alkyle en C₁-C₆ et
(c) au moins un composant émulsifiant.
